Europäisches Patentamt

**European Patent Office**

**Office européen des brevets**

(11) Publication number: **0 008 519**
A1

(12) **EUROPEAN PATENT APPLICATION**

(21) Application number: **79301657.7**

(22) Date of filing: **14.08.79**

(51) Int. Cl.³: **F 16 J 15/32**
**F 16 J 9/00, B 60 T 11/16**

(30) Priority: **16.08.78 GB 3358178**

(43) Date of publication of application:
**05.03.80 Bulletin 80/5**

(84) Designated Contracting States:
**AT BE CH DE FR IT LU NL SE**

(71) Applicant: **LUCAS INDUSTRIES LIMITED**
**Great King Street**
**Birmingham(GB)**

(72) Inventor: **Flynn, Derek Joseph**
**1 Gaydon Road**
**Solihull, West Midlands(GB)**

(74) Representative: **Hodding, Henry Squarey et al,**
**A.A. THORNTON & CO. Northumberland House 303-306**
**High Holborn**
**London, WC1V 7LE(GB)**

(54) **Piston and cylinder seal.**

(57) A seal for use between the piston (6) and cylinder of a hydraulic brake master cylinder comprises: an inner annular portion (2) which is located in a groove (5) in the piston (6); a web portion (4) which extends radially outwardly and axially forwardly from the inner annular portion (2); and an outer annular portion (3) which extends radially outwardly and axially forwardly from the web portion (4). The outer annular portion (3) seals against the cylinder wall during forward (arrow X) strokes of the piston. During return strokes the seal flexes about an approximate centre of flexure (14) and because the whole of the outer annular portion (3) trails behind the centre of flexure in the direction of the return stroke, the whole of the outer annular portion moves away from the cylinder wall to permit fluid recuperation.

FIG.2.

## Piston and Cylinder Seal.

This invention relates to a seal for use between a piston and cylinder, an embodiment of seal according to the invention being particularly useful in a hydraulic master cylinder of, for example, a vehicle braking system.

Prior art master cylinders comprising a cylinder and a piston plunger mounted for movement within the cylinder having included flexible seals between the piston and the cylinder, the seal being permanently in sealing contact with the piston and being designed to sealingly engage the cylinder wall during each forward or working stroke of the piston and flex away from the cylinder wall during each return of recuperation stroke of the piston to allow fluid to flow past the seal. Such seals have included a radially inner portion in sealing contact with the piston, a web extending in a radial plane outwardly from the inner portion to adjacent the wall of the cylinder, and an outer annular portion in the form of a cylinder extending forwardly from the outer end of the web, the outer surface of the outer angular portion being designed to sealingly engage the cylinder wall. With such seals it has been found that during the recuperation stroke the flexing of the seal can be such that the outer surface of the outer annular portion adjacent the web remains in contact with the cylinder wall. Indeed, it appears that this region may actually move radially outwardly as the seal flexes during the recuperation stroke. Any contact between the seal and the cylinder wall in this region during the recuperation stroke not only impedes the flow of fluid past the seal but also can result in wear and damage to the seal in this region.

According to one feature of the present invention there is provided a seal for use between a piston and a cylinder, the seal comprising; an inner annular portion for sealingly engaging the piston; a web portion extending radially outwardly and axially forwardly from the inner annular portion; and an outer annular portion extending axially forwardly from the outer end of the web portion, the outer annular portion including a sealing zone on its radially outer surface for slidingly and sealingly engaging the wall of the cylinder.

According to another feature of the present invention there is provided a piston and cylinder pump assembly comprising a cylinder; a piston mounted in the cylinder for axial sliding movement relative to the cylinder; and a seal between the piston and cylinder, the seal comprising an inner annular portion sealingly engaging the piston; a web portion extending radially outwardly and axially forwardly from the inner annular portion along a support wall provided on the piston and terminating adjacent the cylinder wall and an outer annular portion extending axially forwardly from the web portion, the arrangement being such that during a forward stroke of the piston within the cylinder the outer annular portion sealingly engages the cylinder wall and the seal is supported on the support wall, and during a return stroke of the piston the seal flexes so that all parts of the seal adjacent the cylinder wall move radially inwardly away from the cylinder wall to permit fluid to flow past the seal.

-3-

With an embodiment of the present invention the problems associated with the prior art are overcome in that all parts of the seal adjacent the cylinder wall move radially inwardly away from the cylinder wall during the recuperation stroke. Accordingly frictional contact between the seal and the cylinder wall is avoided during the recuperation stroke and the problem of seal wear due to this contact is eliminated.

The above and further features and advantages of the present invention will become clear from the following description of an embodiment thereof, given by way of example only, reference being had to the accompanying drawings therein:

Figure 1 is a cross sectional view of a seal; and

Figure 2 shows a portion of a brake master cylinder piston fitted with a seal as shown in Figure 1.

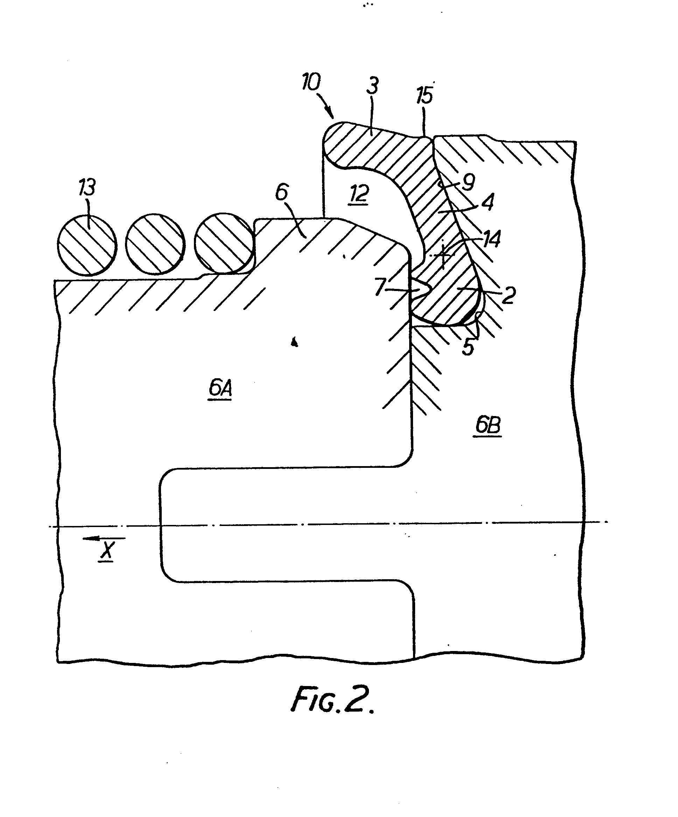

Referring to the drawings the seal 1 includes an inner annular portion 2 and an outer annular portion 3 interconnected by an integral web 4. The inner annular portion is, in use, located in a groove 5 (Figure 2) in a piston 6 in order to retain the seal on the piston and provide a fluid seal between the seal 1 and piston 6. In order to increase the flexibility of the inner annular portion 2 in order to allow the inner annular portion to seat firmly within the groove 6 without distorting the web portion an annular recess 7 is provided in the inner annular portion 2. In order to further improve the flexibility of the inner annular portion 2 other annular recesses may be provided co-axially with the recess 7, or in the alternative individual cut-outs or relieved portions may be provided around the circumference of the axial face of the inner annular portion.

The web 4 extends radially outwardly and axially forwardly from the inner annular portion 2.

and is generally frusto-conical in shape although the radial outer extremity 8 of the trailing edge of the web portion extends in a radial plane. A support surface 9 complementary to the trailing surface of the web portion is provided on the piston 6.

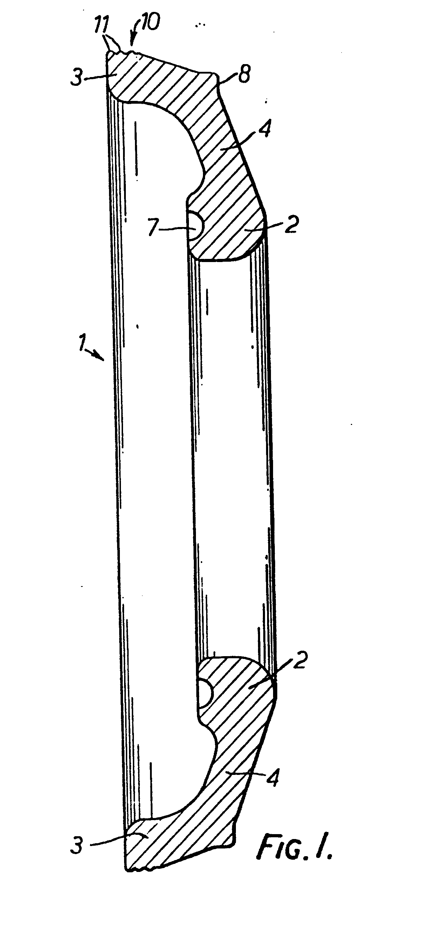

The outer annular portions 3 extends radially outwardly and axially forward. from the outer end of web portion, and is again generally frusto conical in shape. The radially outer surface of the outer annular portion is formed with a sealing zone 10 for slidingly and sealingly engaging the wall of a cylinder in which the piston is housed. The sealing zone 10 may be plane as shown in Figure 2, or may comprise a series of annular ridges 11 as shown in Figure 1 in order to minimise the sealing area to keep friction and wear to a low level whilst maintaining effective sealing.

Whilst the support surface 9 may be smooth as illustrated in Figure 2 it may, if desired, be provided with small circular co-axial grooves or ribs to assist in retaining the seal against spreading radially when under pressure.

Whilst the piston 6 may be formed integrally, it may if desired be manufactured in two parts 6A and 6B which are assembled to form the groove 5.

In use, during a forward stroke of the piston (i.e. a stroke in the direction of the arrow X of Figure 2) fluid under pressure fills the annular recess 12 defined between the outer annular portion 3 of the seal and the piston. part 6A and forces the outer annular portion 3 into firm sealing contact with the piston. Axial forces imposed on the seal by the high pressure fluid are supported by the support surface 9. During the return or recuperation stroke a return spring 13 forces the piston through the cylinder in the direction opposite to the arrow X of Figure 2.

During this stroke a pressure differential is created across the seal and fluid flows from the right hand side of the piston as viewed in Figure 2 to the left hand side. This action causes the outer annular portion 3 of the seal and part of the web 4 to flex about an approximate point of flexure 14. During flexure all parts of the seal adjacent the cylinder wall moves inwardly away from the cylinder wall in order to permit the flow of fluid past the seal. Although the flexure of the seal is complex and will to some extent be determined by the speed of the recuperation stroke, the viscosity of the fluid, etc., as a first approximation the movement of the edge 15 of the outer annular portion may be regarded as along a circular arc centred on the point of flexure. Accordingly, since the point of flexure is located in advance of the edge 15 in the direction the recuperation stroke, flexure of the point 15 during the recuperation stroke will move the edge 15 initially parallel to the cylinder wall and then away from the cylinder wall, and at no time will the edge 15 move towards the cylinder wall.

In contrast, in prior art seals where flexure occurred about a point trailing the edge of the outer annular portion of the seal in a direction of the recuperation stroke, deflection of the edge of the outer annular portion about the centre of flexure resulted in the edge moving towards the wall of the cylinder, increasing frictional engagement between the edge and the wall of the cylinder.

The reduced or eliminated frictional contact between the outer annular portion of the seal and the cylinder wall during the recuperation stroke eliminates localised compression of the seal at its outer axially forward edge in a direction of the recuperation stroke, and accordingly eliminates wear at this point. The elimination of wear at this point significantly reduces contamination of the fluid by seal debris, and accordingly reduces the abrading action on the seal caused by seal debris contained in the fluid.

It will be appreciated that in the interest of clarity the piston and seal assembly is shown in Figure 1 removed from its cylinder, with the outer portion of the seal in its relaxed shape. The diameter of the cylinder in which the piston is to be fitted will be very close to the outside diameter of the piston part 6B and accordingly when the piston is mounted in the cylinder the outer surface of the seal will be formed into a generally cylindrical shape.

CLAIMS:

1.        A seal for use between a piston and a cylinder, the seal comprising;  an inner annular portion for sealingly engaging the piston;  a web portion extending radially outwardly and axially forwardly from the inner annular portion;  and an outer annular portion extending axially forwardly from the outer end of the web portion, the outer annular portion including a sealing zone on its radially outer surface for slidingly and sealingly engaging the wall of the cylinder.

2.        A seal according to claim 1 wherein the inner annular portion includes an annular bead to be received in a groove provided in the piston, and the bead is provided with at least one recessed portion to increase the flexibility of the bead.

3.        A seal according to claim 2 wherein the at least one recessed portion includes at least one annular recess  co-axial with the bead.

4.        A seal according to any preceding claim wherein the outer annular portion extends radially outwardly from the outer end of the web portion and includes a sealing zone at its end remote from the web portion for sealingly engaging the cylinder.

5.        A seal according to claim 4 wherein the sealing zone is a smooth surface area of the outer annular portion.

6.        A seal according to claim 4 wherein the sealing zone is provided with a plurality of annular ridges.

7.      A seal for use between a piston and a cylinder, substantially as hereinbefore described with reference to and as shown in the accompanying drawings.

8.      A piston and cylinder pump assembly comprising a cylinder;  a piston mounted in the cylinder for axial sliding movement relative to the cylinder;  and a seal between the piston and cylinder, the seal comprising an inner annular portion sealingly engaging the piston; a web portion extending radially outwardly and axially forwardly from the inner annular portion along a support wall provided on the piston and terminating adjacent the cylinder wall and an outer annular portion extending axially forwardly from the web portion, the arrangement being such that during a forward stroke of the piston within the cylinder the outer annular portion sealingly engages the cylinder wall and the seal is supported on the support wall, and during a return stroke of the piston the seal flexes so that all parts of the seal adjacent the cylinder wall move radially inwardly away from the cylinder wall to permit fluid to flow past the seal.

9.      A piston and cylinder pump according to claim 8 wherein the support wall is provided with grooves or ribs to assist in retaining the seal against spreading radially.

10.     A piston and cylinder pump according to claim 9 wherein the radially outermost part of the support wall extends in a radial plane and is located axially forwardly of the centre of flexure about which the seal flexes during the return stroke.

11.      A piston and cylinder pump according to any of
claims 8 to 10 wherein the seal is a seal according
to any of claims 1 to 7.

12.      A piston and cylinder pump, substantially
as hereinbefore described with reference to and as
shown in the accompanying drawings.

13.      A hydraulic brake master cylinder incorporating
a piston and cylinder pump according to any of claims
8 to 12.

FIG. I.

FIG.2.

# EUROPEAN SEARCH REPORT

Application number

EP 79 301 657.7

## DOCUMENTS CONSIDERED TO BE RELEVANT

| Category | Citation of document with indication, where appropriate, of relevant passages | Relevant to claim |
|---|---|---|
| | DE - B - 1 119 610 (STABEG APPARATE-BAUGESELLSCHAFT) <br> * fig. 1 to 5 * | 1,2,4, 5,7,12 |
| | GB - A - 785 167 (TEVES et al.) <br> * claim 1; fig. 1 and 2 * | 1,2,4, 5,7,12 |
| | GB - A - 815 971 (RENAULT) <br> * page 1, lines 56 to 70; claims 1 and 2; fig. 1 to 9 * | 1-5,7, 8,11- 13 |
| | GB - A - 860 090 (RENAULT) <br> * fig. 1 to 7 * | 1,2,4, 5,7,8 11,12 |
| | US - A - 2 293 564 (WAGNER ELECTRIC CORPORATION) <br> * claim 1; fig. 1 to 4 * | 1,2,4, 5,7, 12 |
| | US - A - 3 173 698 (MINNESOTA RUBBER COMPANY) <br> * fig. 1 to 3 * | 1-4, 7 |
| | US - A - 4 061 346 (GENERAL MOTORS CORPORATION) <br> * claims 1 and 2; fig. 1 to 3 * <br> -- ./.. | 1, 4-6, 8,11- 13 |

### CLASSIFICATION OF THE APPLICATION (Int. Cl.)

F 16 J 15/32
F 16 J 9/00
B 60 T 11/16

### TECHNICAL FIELDS SEARCHED (Int.Cl.)

B 60 T 11/00
F 16 J 1/00
F 16 J 9/00
F 16 J 15/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 07-11-1979 | MASSALSKI |

EPO Form 1503.1 06.78

**European Patent Office**

**EUROPEAN SEARCH REPORT**

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | GB - A - 937 399 (SULZER)<br><br>* entire document *<br><br>-- | | |
| A | US - A - 3 031 200 (CHIKSAN COMPANY)<br><br>* entire document *<br><br>---- | | |
| | | | TECHNICAL FIELDS SEARCHED (Int. Cl.3) |

EPO Form 1503.2  06.78